# EUROPEAN PATENT SPECIFICATION

(11) **EP 1 619 681 B1**
(45) Date of publication and mention of the grant of the patent: **03.03.2010**
(21) Application number: 05254594.4
(22) Date of filing: 22.07.2005
(51) Int. Cl.: G11B 19/04, G11B 19/28

(54) **Optical recording/ reproducing apparatus for CLV error recovery and method thereof**
Optisches Aufzeichnungs/Wiedergabegerät für CLV-Fehlerkorrektur und Verfahren dazu
Appareil optique d'enregistrement/reproduction pour correction d'erreur CLV et méthode pour ceci

(30) Priority: 24.07.2004 KR 2004057897
(43) Date of publication of application: 25.01.2006
(73) Proprietor: SAMSUNG ELECTRONICS CO., LTD., Suwon-si, Gyeonggi-do (KR)
(72) Inventor: Bang, Kyu-chul, Guro-gu Seoul (KR)
(74) Representative: Robinson, Ian Michael

(56) References cited:
- EP-A2- 0 878 795
- WO-A-98/36413
- JP-A- 9 044 988
- US-A- 5 161 142
- US-A- 5 343 453
- US-A- 5 699 335
- US-A1- 2001 055 245

## Description

The present invention relates to an optical recording/reproducing apparatus for recovery of a CLV (Constant Linear Velocity) error and a method thereof. More particularly, the present invention relates to an optical recording/reproducing apparatus for a CLV error recovery and a method thereof that can recover from a CLV error in a short time.

Generally, an optical recording/reproducing apparatus for recording/reproducing data in/from an optical disk such as a CD (Compact Disk), a DVD (Digital Versatile Disk), etc., performs a low-speed control operation when it records/reproduces a signal. This is because noise occurring due to an excessive current change is reduced as the signal reproduction is performed at a lower speed. Additionally, as the reproduction speed of a highfrequency signal is heightened, the reproduced signal deteriorates, and this affects the stability of a system. Accordingly, a low-speed control is required in reproducing the signal.

Generally, a CLV (Constant Linear Velocity) rotating system is used as a disk rotating system that controls a low-speed recording/reproduction of data. If the CLV system is used, the data processing speed is controlled to be constant on an inner/outer periphery of the disk. This CLV system makes it possible to record/reproduce data by rotating the disk at a constant linear speed, and thus, the density of the data being recorded/reproduced is kept constant irrespective of the inner/outer periphery of the disk, resulting in a high-density data being stored.

However, if the CLV system is used when the data is reproduced from the optical disk at high speed, many problems occur due to the high rotating speed on the inner periphery of the disk and the increase of the power consumption. In order to overcome these problems, a CAV (Constant Angular Velocity) system for rotating the disk with the constant number of rotations using a wideband PLL (Phase Locked Loop) and a buffer control has been used together with the CLV system. Unlike the CLV system, the CAV system controls the rotating speed of the disk to be constant, and thus, the processing speed of data on the inner periphery of the disk differs from that on the outer periphery of the disk.

If the CLV is not maintained due to an external factor and a CLV system that can store high-density data is used, i.e., if a linear speed cannot be kept constant, the data that is recorded to match the linear speed cannot be read out from the disk, and this causes the system operation such as the data recording, reproduction, etc., to be stopped. In this case, a search operation for moving the pickup to a desired position on the disk is performed.

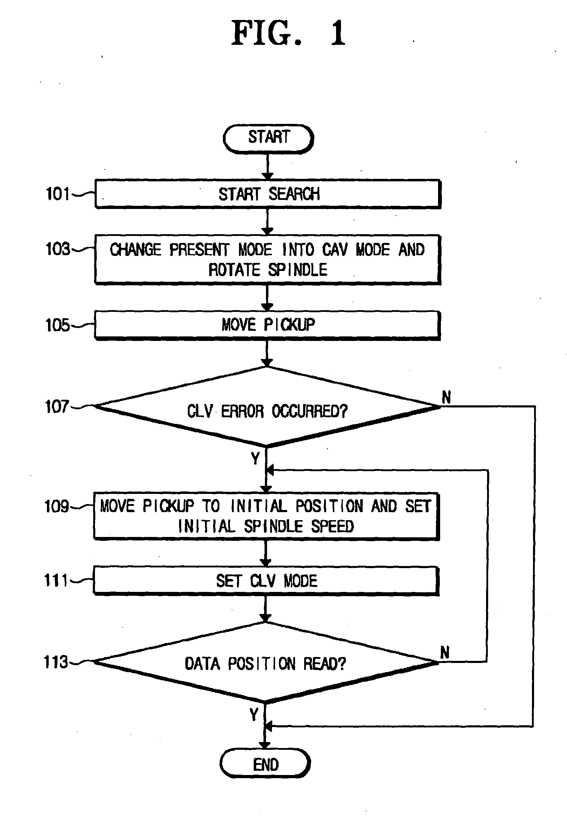

Figure 1 is a flowchart explaining a method for recovery of a CLV error occurring during the search operation in a conventional optical recording/reproducing apparatus.

In Figure 1, a search starts to move a pickup to its desired position on a disk at operation 101. For the CLV control at the desired position on the disk, the present mode is changed from a CLV mode to a CAV mode, and the rotating speed of a spindle is changed so as to match the CLV at the position to which the pickup will move at operation 103. This operation is performed using a CAV speed table prepared to store the speed value that is equal to the CLV speed at a specified position of the disk.

Then, the pickup moves to the desired position by driving a step motor at operation 105.

Then, it is determined whether the pickup has moved to the desired position, i.e., whether a CLV error has occurred by reading the data stored at the position to which the pickup has moved at operation 107.

If no CLV error occurs, the present mode is changed from the CAV mode to the CLV mode, and the data recorded at the position to which the pickup has moved is read out. If no CLV error occurs, it means that the data of the desired position has been read, and thus, the CLV error recovery is not required.

By contrast, if the CLV error has occurred, the pickup returns to its initial position, and the spindle is rotated to match the initial position of the pickup at operation 109. At this time, the CLV error occurs if the pickup fails to move to the desired position due to problems such as the deterioration of a sled motor, scratch or tilt of the disk, etc. Additionally, the CLV error may occur if the spindle cannot perform a normal operation due to the deterioration of a spindle motor that drives the spindle.

After the pickup moves to its initial position and the rotating speed of the spindle is set to an initial speed, the present mode is changed to a CLV mode to read the data at a constant linear speed at operation 111.

At operation 113, if it is determined that the data at the desired position cannot be read, the pickup moves again to its initial position, and the same operation is repeated. However, if it is determined that the data at the desired position is read, it means that the CLV error recovery has been performed.

However, in the optical recording/reproducing apparatus that requires a realtime system, the conventional method for a CLV error recovery has the problems in that it takes a lot of time to perform its initialization work in order to move the pickup to its initial position and then to rotate the disk.

Additionally, if the rotating speed of the spindle and the position of the pickup do not coincide with values that should be set in its initialization process due to external environmental factors or an internal factor such as the deterioration of the spindle motor or the sled motor, the mode is not changed to the CLV mode, and thus the system cannot be initialized.

EP-A-0 878 795 discloses a spindle motor control system for a disk player. The pre-characterising portions of the appended claims are based on this document.

The present invention has been developed in order to address the above drawbacks and other problems associated with the conventional arrangement.

According to the present invention there is provided an apparatus and method as set forth in the appended claims. Preferred features of the invention will be apparent from the dependent claims, and the description which follows.

An aspect of the present invention provides an optical recording/reproducing apparatus for a CLV error recovery and a method thereof that would recover from a CLV error in that the data of the desired position cannot be read in a short time.

These and/or other aspects and advantages of the invention will become apparent and more readily appreciated from the following description of the embodiments, taken in conjunction with the accompanying drawings of which:
Figure 1 is a flowchart explaining a method for recovery of a CLV error occurring during a search operation in a conventional optical recording/reproducing apparatus;
Figure 2 is a block diagram of an optical recording/reproducing apparatus for a CLV error recovery according to an embodiment of the present invention;
Figure 3 is a flowchart illustrating a method for a CLV error recovery in an optical recording/reproducing apparatus according to an embodiment of the present invention; and
Figure 4 is a view explaining in detail a method for a CLV error recovery in an optical recording/reproducing apparatus according to an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

Certain embodiments of the present invention will be described in greater detail with reference to the accompanying drawings.

In the following description, the same drawing reference numerals are used for the same elements even in different drawings. The matters defined in the description such as a detailed construction and elements are provided to assist in a comprehensive understanding of the present invention. Thus, it is apparent that the present invention can be carried out without those defined matters. Also, well-known functions or constructions are not described in detail since they would obscure the present invention in unnecessary detail.

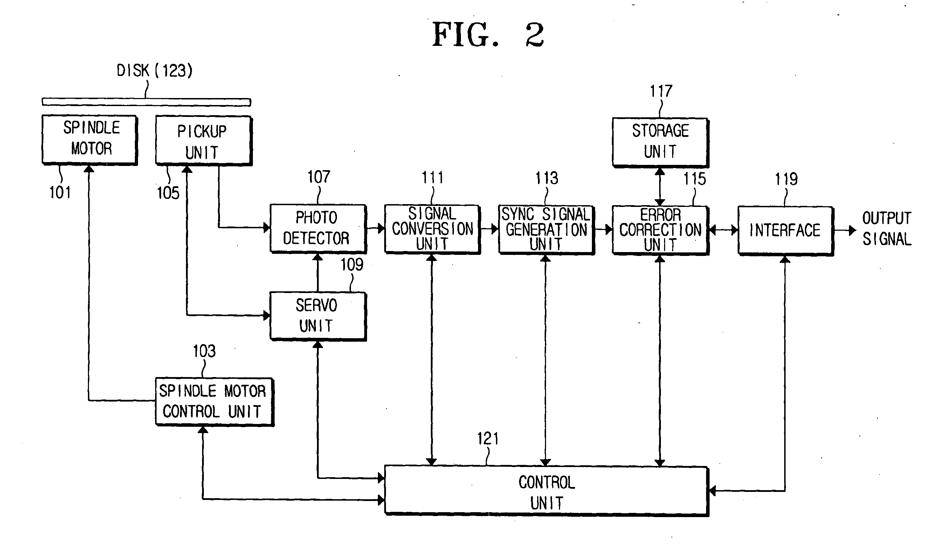

Figure 2 is a block diagram of an optical recording/reproducing apparatus for a CLV error recovery according to an embodiment of the present invention.

In Figure 2, the apparatus for a CLV error recovery in an optical recording/reproducing apparatus according to the present invention includes a spindle motor 101, a spindle motor control unit 103, a pickup unit 105, a photo detector 107, a servo unit 109, a signal conversion unit 111, a sync signal generation unit 113, an error correction unit 115, a storage unit 117, an interface 119 and a control unit 121.

First, the spindle motor 101 rotates a disk being reproduced according to a signal for controlling the spindle motor 101. The spindle motor control unit 103 controls the operation of the spindle motor 101 according to a CLV (Constant Linear Velocity) system for keeping a constant linear velocity or a CAV (Constant Angular Velocity) system for keeping a constant angular velocity.

The pickup unit 105 irradiates beams onto a disk 123, and receives the beams reflected from the disk 123. The servo unit 109 provides information about a pickup focusing direction and a tracking direction.

The photo detector 107 receives and outputs a signal from the pickup unit 105 in the form of an RF signal. The signal conversion unit 111 receives and converts the signal output from the photo detector 107 into a digital signal, and generates a judgment signal for judging whether a spindle control is normally performed.

The sync signal generation unit 113 performs synchronization of a signal processing speed by generating a reference clock and synchronizing the processing speed of the signal output from the signal conversion unit 111 with the reference signal generated from the sync signal generation unit 113.

The error correction unit demodulates an output signal of the sync signal generation unit 115, and corrects an error occurring due to, for example, a scratch of the disk. This error correction is performed using a predetermined error code.

The storage unit 117 stores the error code used in the error correction unit 115, and provides a data processing space for the error correction performed by the error correction unit 115.

The interface unit 119 performs an operation related to a data scramble and data transmission with a host, and controls an outer buffer memory as well.

The control unit 121 controls the whole operation of the optical recording/reproducing apparatus. Particularly, the control unit 121 determines whether the operation of the sync signal generation unit 113 is normal according to the judgment signal for determining whether the spindle control is normally performed that is generated from the signal conversion unit 111.

Additionally, the control unit 121 compares the present rotating speed of the spindle with a specified speed, and controls the spindle motor control unit 103 to adjust the spindle motor 101 to make the present rotating speed equal to the specified speed.

In the control unit 121, there is a table wherein rotating speeds of the spindle according to positions of the disk 123 are stored, i.e., a table wherein data positions and speed values which are equal to CLVs at the data positions, respectively. Accordingly, if the CLV error occurs, the control unit 121 controls the spindle motor 101 to reach a specified spindle speed according to the data position using the table. The specified speed is a spindle rotating speed corresponding to the specified data position.

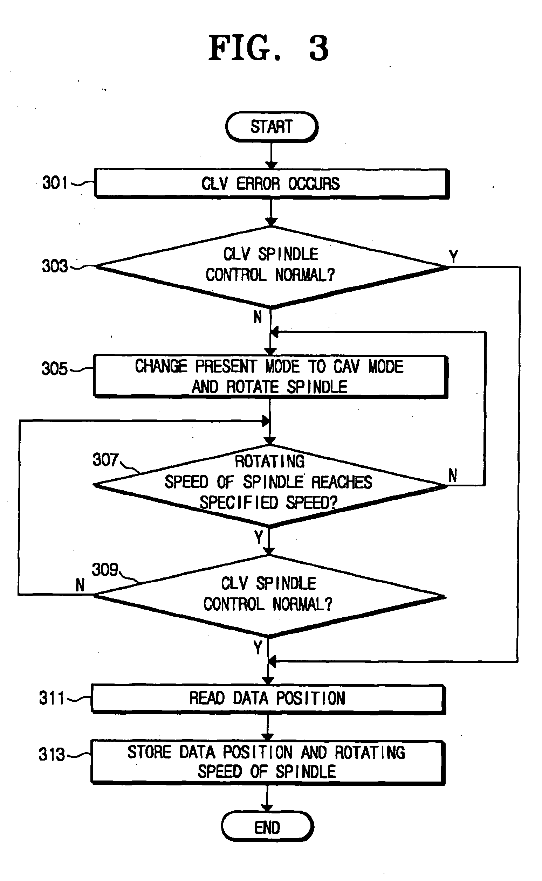

Figure 3 is a flowchart illustrating a method for a CLV error recovery in an optical recording/reproducing apparatus according to an embodiment of the present invention.

In Figure 3, if a CLV error occurs in the optical recording/reproducing apparatus at operation 301, it is determined whether the CLV spindle control is normally performed at operation 303. Here, the CLV error corresponds to the case in which the data of the present position of the disk 123 cannot be read. This CLV error may occur during a search operation for searching for a specified position of the disk 123 or during other normal operations for recording/reproducing data in/from the disk 123. Specifically, the CLV error occurs if the rotating speed of the spindle cannot reach the specified speed due to an abnormal operation of the spindle motor 101 or the position of the pickup cannot reach the specified position due to an abnormal operation of the sled motor.

Whether the CLV spindle control is normally performed is determined by determining whether the signal for controlling the spindle is normal through the sync signal generation unit 113.

Then, in operation 305, if the CLV spindle control is not normally performed, the present mode is changed from a CLV mode to a CAV mode in order to change the speed of the spindle, and then the spindle is rotated. The rotating speed of the spindle is set using a prepared CAV speed table. In this case, the CAV speed table is a table prepared by disks and speeds, and stores data positions and speed values which are equal to CLVs at the respective data positions.

When the spindle is rotated using the CAV speed table, it is determined whether the rotating speed of the spindle reaches a specified speed stored in the CAV speed table at operation 307. Whether the rotating speed of the spindle reaches the specified speed is determined depending on whether the spindle rotating speed judgment signal is in a high state.

At this time, the state of the spindle rotating speed judgment signal is determined by comparing the rotating speed of the spindle sensed by a sensor (not illustrated) for sensing the rotating speed of the spindle with the rotating speed of the spindle in the CAV speed table stored in the control unit 121. That is, if the present rotating speed of the spindle sensed by the sensor is equal to the rotating speed in the CAV speed table, the spindle rotating speed judgment signal is in a high level, and otherwise, the spindle rotating speed judgment signal is in a low level.

The rotating speed of the spindle is increased until the sensed rotating speed of the spindle reaches the specified speed stored in the CAV speed table. If the rotating speed of the spindle reaches the specified speed, it is determined whether the CLV spindle control is normally performed at operation 309.

If the CLV spindle control is normally performed, the data position is read from the disk at operation 311. If the CLV spindle control is normally performed and the rotating speed of the spindle reaches the specified speed, it means that the recovery of the CLV error is completed, and thus, the data at the present position is read.

Then, the data read position and the rotating speed of the spindle at the data position are stored in the CAV speed table to update the CAV speed table value at operation 313. Accordingly, in the event that the existing CAV speed table is improper due to the deterioration of the spindle motor 101 or the sled motor that operates the pickup, the CAV speed table can easily be upgraded.

By contrast, if the spindle control is not normally performed although the rotating speed of the spindle reaches the specified speed, the rotating speed of the spindle is changed again, until the rotating speed of the spindle reaches the specified speed in the CAV speed table at operation 307. This operation is repeated until the CLV spindle control is normally performed.

If the CLV spindle control is normally performed at operation 303, this means that no CLV error occurs. Thus, the data position is read at operation 311, and the data position and the rotating speed of the spindle at this data position are stored at operation 313.

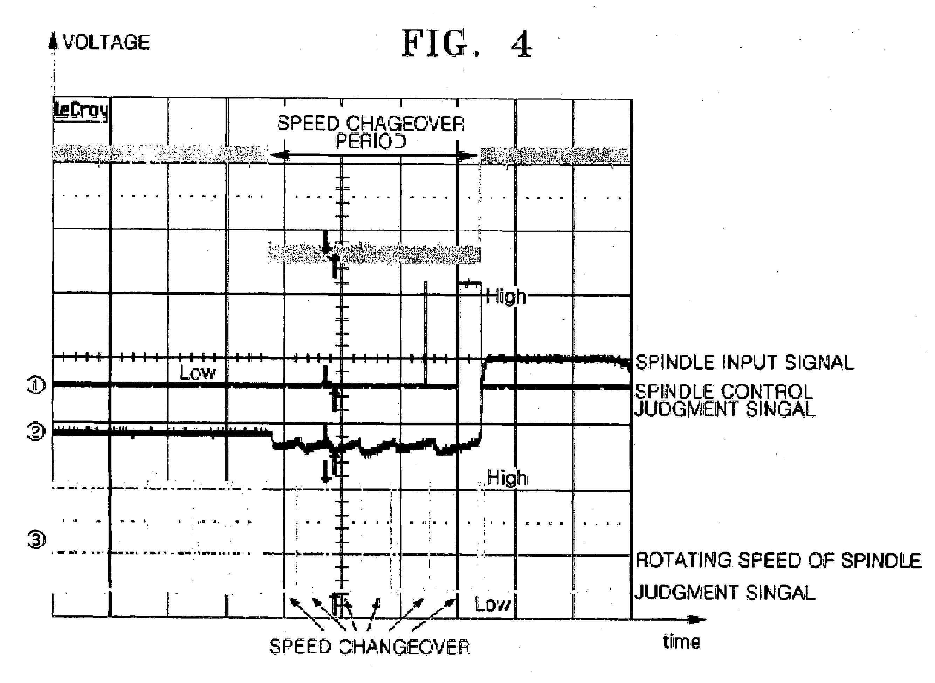

Figure 4 is a view explaining in detail a method for a CLV error recovery in an optical recording/reproducing apparatus according to an embodiment of the present invention.

In Figure 4, ① indicates a spindle control judgment signal, ② a spindle input signal, and ③ a spindle rotating speed judgment signal, respectively. Additionally, the horizontal axis represents time, and the vertical axis represents voltage level.

In Figure 4, the spindle control judgment signal ① is a signal for judging whether the spindle operates normally, and is generated by the signal conversion unit 111. The sync signal generation unit 113 determines whether the spindle control is normally performed according to the spindle control judgment signal. If it is determined that the spindle control judgment signal ① is normal, then it is set to a high level state, and if not, it is set to a low level state.

The spindle rotating speed judgment signal ③ is a signal for determining whether the rotating speed of the spindle reaches the specified speed and, which is one of the values stored in the CAV speed table. If the rotating speed of the spindle is equal to the specified speed in the CAV speed table, then the spindle rotating speed judgment signal ③ is set to a high level state, and if not, the spindle rotating speed judgment signal is set to a low level state. If the spindle rotating speed judgment signal ③ is set high but the spindle control judgment signal ① is low, the rotating speed of the spindle is changed. That is, as shown in Figure 4, if the spindle rotating speed judgment signal ③ is set high but the spindle control judgment signal ① is set low, the value of the spindle input signal ② that is inputted to the spindle for the speed control of the spindle is changed in order to change the rotating speed of the spindle. However, if both the spindle input signal ② and the spindle rotating speed judgment signal ③ are all at a high level state, i.e., if the CLV error recovery is performed, the spindle input signal ② is not changed. That is, if both the spindle input signal ② and the spindle rotating speed judgment signal ③ are all at a high level state, the CLV error recovery is performed by reading the data position, and the CAV speed table is upgraded by storing the data position and the rotating speed of the spindle at the corresponding data position.

As described above, according to the present invention, the CLV error recovery can be performed in a short time without any separate change of hardware structure in comparison to the method for recovering from the error by initializing the rotating speed and the position if the CLV error occurs.

Additionally, even if the prepared CAV speed table does not coincide with the present system operation due to the deterioration of the external environment or internal appliance, the speed table can easily be upgraded to match the system operation.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

## Claims

1. An optical recording/reproducing apparatus for a CLV (Constant Linear Velocity) error recovery, comprising:
a spindle motor control unit (103) for controlling a rotating speed of a spindle motor (101) that rotates a disk and compare the present rotating speed of the spindle with a specified speed;
a pickup unit (105) for irradiating beams onto the disk, receiving the beams reflected from the disk and outputting a corresponding RF signal;
a signal conversion unit (111) for receiving and converting the signal output from the pickup unit (105) into a digital signal, and generating a judgment signal for determine whether a spindle control is normally performed;
a sync signal generation unit (113) for receiving the judgment signal and determine whether the spindle control is normally performed;
a storage unit (117) for storing position values of the disk and rotating speed values of the spindle at the positions of the disk in a table; and
a control unit (121) arranged to:
change from a CLV mode to a CAV (Constant Angular Velocity) mode in order to change the speed of the spindle if the spindle control is not normally performed and compare the present rotating speed of the spindle with a specified speed;
read a data position of the disk if the present rotating speed of the spindle is equal to the specified speed and the spindle control is normally performed; and
**characterised in that** the control unit (121) is arranged to:
change the rotating speed of the spindle until data can be read if the present rotating speed of the spindle is equal to the specified speed and the spindle control is not normally performed.

2. The optical recording/reproducing apparatus as claimed in claim 1, wherein the control unit (121) operates to store the present rotating speed of the spindle and a present data position in the storage unit (117) if the present rotating speed of the spindle is equal to the rotating speed of the spindle stored in the storage unit (117) and the spindle control is normally performed.

3. The optical recording/reproducing apparatus as claimed in claim 1 or 2, wherein the control unit (121) controls the spindle motor control unit (103) to change the rotating speed of the spindle if the present rotating speed of the spindle is different from the rotating speed of the spindle stored in the storage unit (117).

4. The optical recording/reproducing apparatus as claimed in claim 1, 2 or 3, wherein the specified speed is any one of the rotating speed values of the spindle stored in the storage unit (117) according to the specified position of the disk.

5. A method for a CLV (Constant Linear Velocity) error recovery in an optical recording/reproducing apparatus, comprising:
determining whether a spindle control is normally performed, by evaluating whether a CLV error corresponds to data of a present position of a disk that cannot be read, if a CLV error occurs in the optical recording/reproducing apparatus;
changing from a CLV mode to a CAV (Constant Angular Velocity) mode in order to change the speed of the spindle and comparing a present rotating speed of the spindle with a specified speed if the spindle control is not normally performed;
determining whether the spindle control is normally performed if the present rotating speed of the spindle is equal to the specified speed; and
reading a data position of the disk if the spindle control is normally performed;
**characterised in that**:
if the present rotating speed of the spindle is equal to the specified speed but the spindle control is not normally performed, changing the rotating speed of the spindle until data can be read.

6. The method as claimed in claim 5, wherein the specified speed is the rotating speed of the spindle at a specified position of the disk, and the rotating speed of the spindle according to the specified position of the disk is stored in a table.

7. The method as claimed in claim 5 or 6, further comprising storing the read data position and the rotating speed of the spindle at the data position.

8. The method of claim 7, wherein the CLV error is capable of occurring during a search operation for a specified position of the disk or during other normal operations for recording/reproducing data in/from the disk.

9. The method of claim 7 or 8, wherein the CLV error is capable of occurring if the rotating speed of the CLV spindle cannot reach a specified speed due to an abnormal operation of a spindle motor (101) or the position of a pickup device cannot reach a specified position due to an abnormal operation of a sled motor.

10. The method of any preceding claim, wherein the rotating speed of the CLV spindle is set using a prepared CAV speed table.

11. The method of claim 10, wherein the CAV speed table stores data positions and speed values equal to corresponding data positions of the CLV spindle.

12. The method of claim 11, wherein it is determined whether the rotating speed of the CLV spindle reaches a specified speed stored in the CAV speed table depending on whether a CLV spindle rotating speed judgment signal is in a high state.

13. The method of claim 12, wherein the state of the spindle rotating speed judgment signal is determined by compare the rotating speed of the CLV spindle sensed by a sensor with a rotating speed of a spindle in the CAV speed table stored in the control unit (121).

14. The method of claim 13, wherein the rotating speed of the CLV spindle is increased until the sensed rotating speed of the CLV spindle reaches the specified speed stored in the CAV speed table in order to determine whether the CLV spindle control is normally performed.

## Patentansprüche

1. Optische Aufzeichnungs-/Wiedergabevorrichtung zur Behebung eines Fehlers de r CL V (konstanten Lineargeschwindigkeit) umfassend:
eine Spindelmotor-Steuereinheit (103) zum Steuern einer Umdrehungsgeschwindigkeit eines Spindelmotors (101), der einen Datenträger dreht, u n d zu m Vergleichen der derzeitigen Umdrehungsgeschwindigkeit der Spindel mit einer spezifizierten Geschwindigkeit;
eine Lesekopfeinheit (105) zum Richten von Strahlen auf den Datenträger, Empfangen der von dem Datenträger reflektierten Strahlen und Ausgeben eines entsprechenden HF-Signals;
eine Signalumsetzungseinheit (111) zum Empfangen des von der Lesekopfeinheit (105) ausgegebenen Signals un d zu m Umsetzen dieses in ein Digitalsignal un d zu m Erzeugen eines Beurteilungssignals zu m Bestimmen, ob eine Spindelsteuerung normal durchgeführt wird;
eine Sync-Signalerzeugungseinheit (113) zum Empfangen de s Beurteilungssignals u n d zum Bestimmen, ob die Spindelsteuerung normal durchgeführt wird;
eine Speichereinheit (117) zum Speichern von Positionswerten de s Datenträgers und Umdrehungsgeschwindigkeitswerten der Spindel an den Positionen des Datenträgers in einer Tabelle; und
eine Steuereinheit (121), die für Folgendes ausgelegt ist:
Wechseln von einem CLV-Modus zu einem Modus der CAV (konstanten Winkelgeschwindigkeit), um die Geschwindigkeit der Spindel zu ändern, wenn die Spindelsteuerung nicht normal durchgeführt wird, und Vergleichen der derzeitigen Umdrehungsgeschwindigkeit der Spindel mit einer spezifizierten Geschwindigkeit;
Lesen einer Datenposition des Datenträgers, wenn die derzeitige Umdrehungsgeschwindigkeit der Spindel gleich der spezifizierten Geschwindigkeit ist und die Spindelsteuerung normal durchgeführt wird; und
**dadurch gekennzeichnet, dass** die Steuereinheit (121) für Folgendes ausgelegt ist:
Ändern der Umdrehungsgeschwindigkeit der Spindel, bis Daten gelesen werden können, wenn die derzeitige Umdrehungsgeschwindigkeit der Spindel gleich der spezifizierten Geschwindigkeit ist und die Spindelsteuerung nicht normal durchgeführt wird.

2. Optische Aufzeichnungs-/Wiedergabevorrichtung nach Anspruch 1, wobei die Steuereinheit (121) wirkt, um die derzeitige Umdrehungsgeschwindigkeit der Spindel und eine derzeitige Datenposition in der Speichereinheit (117) zu speichern, wenn die derzeitige Umdrehungsgeschwindigkeit der Spindel gleich de r in de r Speichereinheit (117) gespeicherten Umdrehungsgeschwindigkeit der Spindel ist und die Spindelsteuerung normal durchgeführt wird.

3. Optische Aufzeichnungs-/Wiedergabevorrichtung nach Anspruch 1 oder 2, wobei die Steuereinheit (121) die Spindelmotor-Steuereinheit (103) steuert, um die Umdrehungsgeschwindigkeit der Spindel zu ändern, wenn die derzeitige Umdrehungsgeschwindigkeit der Spindel von der in d e r Speichereinheit (117) gespeicherten Umdrehungsgeschwindigkeit der Spindel verschieden ist.

4. Optische Aufzeichnungs-/Wiedergabevorrichtung nach Anspruch 1, 2 oder 3, wobei die spezifizierte Geschwindigkeit ei n beliebiger der Umdrehungsgeschwindigkeitswerte der Spindel ist, die gemäß de r spezifizierten Position des Datenträgers in de r Speichereinheit (117) gespeichert sind.

5. Verfahren zur Behebung eines Fehlers der CLV (konstanten Lineargeschwindigkeit) in einer optischen Aufzeichnungs-/Wiedergabevorrichtung, mit den folgenden Schritten:
Bestimmen, ob eine Spindelsteuerung normal durchgeführt wird, durch Auswertung, ob ein CLV-Fehler Daten einer derzeitigen Position eines Datenträgers entspricht, die nicht gelesen werden können, wenn ein CLV-Fehlerstatus in der optischen Aufzeichnungs-/Wiedergabevorrichtung auftritt;
Wechseln von einem CLV-Modus zu einem Modus der CAV (konstanten Winkelgeschwindigkeit), um die Geschwindigkeit de r Spindel zu ändern, und Vergleichen einer derzeitigen Umdrehungsgeschwindigkeit der Spindel mit einer spezifizierten Geschwindigkeit, wenn die Spindelsteuerung nicht normal durchgeführt wird;
Bestimmen, ob die Spindelsteuerung normal durchgeführt wird, wenn die derzeitige Umdrehungsgeschwindigkeit der Spindel gleich der spezifizierten Geschwindigkeit ist; und
Lesen einer Datenposition des Datenträgers, wenn die Spindelsteuerung normal durchgeführt wird;
**dadurch gekennzeichnet, dass**:
wenn die derzeitige Umdrehungsgeschwindigkeit der Spindel gleich der spezifizierten Geschwindigkeit ist, aber die Spindelsteuerung nicht normal durchgeführt wird, die Umdrehungsgeschwindigkeit der Spindel geändert wird, bis Daten gelesen werden können.

6. Verfahren nach Anspruch 5, wobei die spezifizierte Geschwindigkeit die Umdrehungsgeschwindigkeit der Spindel an einer spezifizierten Position des Datenträgers ist und die Umdrehungsgeschwindigkeit der Spindel gemäß der spezifizierten Position des Datenträgers in einer Tabelle gespeichert wird.

7. Verfahren nach Anspruch 5 oder 6 ferner mit dem Schritt des Speicherns der Lese-Datenposition und der Umdrehungsgeschwindigkeit der Spindel an der Datenposition.

8. Verfahren nach Anspruch 7, wobei der CLV-Fehler während einer Suchoperation für eine spezifizierte Position des Datenträgers oder während anderer normal e r Operationen zu m Aufzeichnen bzw. Wiedergeben von Daten in bzw. aus dem Datenträger auftreten kann.

9. Verfahren nach Anspruch 7 oder 8, wobei der CLV-Fehler auftreten kann, wenn die Umdrehungsgeschwindigkeit der CLV-Spindel aufgrund eines abnormen Betriebs des Spindelmotors (101) eine spezifizierte Geschwindigkeit nicht erreichen kann oder die Position einer Lesekopfeinrichtung aufgrund ei n e s abnormen Betriebs des Schlittenmotors eine spezifizierte Position nicht erreichen kann.

10. Verfahren nach einem der vorhergehenden Ansprüche, wobei die Umdrehungsgeschwindigkeit der CLV-Spindel unter Verwendung einer präparierten CAV-Geschwindigkeitstabelle eingestellt wird.

11. Verfahren nach Anspruch 10, wobei die CAV-Geschwindigkeitstabelle Datenpositionen und Geschwindigkeitswerte gleich entsprechenden Datenpositionen der CLV-Spindel speichert.

12. Verfahren nach Anspruch 11, wobei abhängig davon, ob sich ein CLV-Spindelumdrehungsgeschwindigkeits-Beurteilungssignal in einem hohen Zustand befindet, bestimmt wird, ob die Umdrehungsgeschwindigkeit der CLV-Spindel eine in d e r CAV-Geschwindigkeitstabelle gespeicherte spezifizierte Geschwindigkeit erreicht.

13. Verfahren nach Anspruch 12, wobei der Zustand des Spindelumdrehungsgeschwindigkeits-Beurteilungssignals durch Vergleichen der Umdrehungsgeschwindigkeit der CLV-Spindel, die durch einen Sensor gemessen wird, mit einer Umdrehungsgeschwindigkeit einer Spindel in der in der Steuereinheit (121) gespeicherten CAV-Geschwindigkeitstabelle bestimmt wird.

14. Verfahren nach Anspruch 13 , wobei die Umdrehungsgeschwindigkeit de r CLV-Spindel vergrößert wird, bis die gemessene Umdrehungsgeschwindigkeit der CLV-Spindel die in d e r CAV-Geschwindigkeitstabelle gespeicherte spezifizierte Geschwindigkeit erreicht, um zu bestimmen, ob die CLV-Spindelsteuerung normal durchgeführt wird.

## Revendications

1. Appareil d'enregistrement/reproduction optique pour correction d'erreur CLV (Vitesse Linéaire Constante), comprenant :
une unité de commande de moteur d'axe (103) destinée à commander la vitesse de rotation d'un moteur d'axe (101) qui fait tourner un disque et à comparer la vitesse de rotation présente de l'axe à une vitesse spécifiée ;
une unité de lecture (105) destinée à projeter des faisceaux sur le disque, à recevoir les faisceaux réfléchis par le disque et à fournir en sortie un signal RF correspondant ;
une unité de conversion de signal (111) destinée à recevoir et à convertir le signal fourni en sortie par l'unité de lecture (105) en un signal numérique, et à générer un signal de jugement pour déterminer si une commande d'axe est normalement effectuée ;
une unité génératrice de signal de synchronisation (113) destinée à recevoir le signal de jugement et à déterminer si la commande d'axe e s t normalement effectuée ;
une unité de stockage (117) destinée à stocker dans une table des valeurs de la position du disque et des valeurs de la vitesse de rotation de l'axe aux positions du disque ; et
une unité de commande (121) conçue pour :
passer d'un mode CLV à un mode CAV (Vitesse Angulaire Constante) afin de modifier la vitesse de l'axe si la commande d'axe n'est pas effectuée normalement et à comparer la vitesse de rotation présente de l'axe à une vitesse spécifiée ;
lire une position de données du disque si la vitesse de rotation présente de l'axe est égale à la vitesse spécifiée et si la commande d'axe est normalement effectuée ; et
**caractérisé en ce que** l'unité de commande (121) est conçue pour :
modifier la vitesse de rotation de l'axe jusqu'à ce que des données puissent être lues si la vitesse de rotation présente de l'axe est égale à la vitesse spécifiée et si la commande d'axe n'est pas effectuée normalement.

2. Appareil d'enregistrement/reproduction optique selon la revendication 1, dans lequel l'unité de commande (121) a pour fonction de stocker dans l'unité de stockage (117) la vitesse de rotation présente de l'axe et une position présente de données si la vitesse de rotation présente de l'axe est égale à la vitesse de rotation de l'axe stockée dans l'unité de stockage (117) et si la commande d'axe e s t normalement effectuée.

3. Appareil d'enregistrement/reproduction optique selon la revendication 1 ou 2, dans lequel l'unité de commande (121) commande l'unité de commande de moteur d'axe (103) pour modifier la vitesse de rotation de l'axe si la vitesse de rotation présente de l'axe est différente de la vitesse de rotation de l'axe stockée dans l'unité de stockage (117).

4. Appareil d'enregistrement/reproduction optique selon la revendication 1, 2 ou 3, dans lequel la vitesse spécifiée est l'une quelconque des valeurs de vitesse de rotation de l'axe stockées dans l'unité de stockage (117) en fonction de la position spécifiée du disque.

5. Procédé destiné à la correction d'erreur CLV (Vitesse Linéaire Constante) dans un appareil d'enregistrement/reproduction optique, consistant à :
déterminer si une commande d'axe e s t normalement effectuée, en évaluant si une erreur CLV correspond à des données qui ne peuvent pas être lues d'une position présente d'un disque si une erreur CLV se produit dans l'appareil d'enregistrement/reproduction optique ;
passer d'un mode CLV à un mode CAV (Vitesse Angulaire Constante) afin de modifier la vitesse de l'axe et de comparer une vitesse de rotation présente de l'axe à une vitesse spécifiée si la commande d'axe n'est pas normalement effectuée ;
déterminer si la commande d'axe e s t normalement effectuée si la vitesse de rotation présente de l'axe est égale à la vitesse spécifiée ; et
lire une position de données du disque si la commande d'axe est normalement effectuée ;
**caractérisé en ce que** :
si la vitesse de rotation présente de l'axe est égale à la vitesse spécifiée et si la commande d'axe n'est pas normalement effectuée, modifier la vitesse de rotation de l'axe jusqu'à ce que des données puissent être lues.

6. Procédé selon la revendication 5, dans lequel la vitesse spécifiée est la vitesse de rotation de l'axe à une position spécifiée du disque, et dans lequel la vitesse de rotation de l'axe, en fonction de la position spécifiée du disque, est stockée dans une table.

7. Procédé selon la revendication 5 ou 6, consistant en outre à stocker la position des données lues et la vitesse de rotation de l'axe à la position des données.

8. Procédé selon la revendication 7, dans lequel l'erreur CLV peut se produire pendant une opération de recherche d'une position spécifiée du disque ou pendant d'autres opérations normales d'enregistrement/reproduction de données sur/depuis le disque.

9. Procédé selon la revendication 7 ou 8, dans lequel l'erreur CLV peut se produire si la vitesse de rotation de l'axe CLV ne peut pas atteindre une vitesse spécifiée du fait d'un fonctionnement anormal du moteur d'axe (101) ou si la position d'un dispositif de lecture ne peut pas atteindre une position spécifiée du fait d'un fonctionnement anormal d'un moteur-traîneau.

10. Procédé selon l'une quelconque des revendications précédentes, dans lequel la vitesse de rotation de l'axe CLV est réglée au moyen d'une table de vitesses CAV préparée.

11. Procédé selon la revendication 10, dans lequel la table de vitesses CAV stocke des positions de données et de s valeurs de vitesse égales à des positions de données correspondantes de l'axe CLV.

12. Procédé selon la revendication 11, dans lequel il est déterminé si la vitesse de rotation de l'axe CLV atteint une vitesse spécifiée stockée dans la table de vitesses CAV selon qu'un signal de jugement de vitesse de rotation d'axe CLV est ou non à un niveau haut.

13. Procédé selon la revendication 12, dans lequel le niveau du signal de jugement de vitesse de rotation d'axe est déterminé par comparaison de la vitesse de rotation de l'axe CLV détectée par un capteur à une vitesse de rotation d'un axe contenue dans la table de vitesses CAV stockée dans l'unité de commande (121).

14. Procédé selon la revendication 13, dans lequel la vitesse de rotation de l'axe CLV est augmentée jusqu'à ce que la vitesse de rotation détectée de l'axe CLV atteigne la vitesse spécifiée stockée dans la table de vitesses CAV afin de déterminer si la commande d'axe CLV est normalement effectuée.
